# EUROPEAN PATENT SPECIFICATION

(11) **EP 3 700 717 B1**
(45) Date of publication and mention of the grant of the patent: **19.03.2025**
(21) Application number: 17797544.8
(22) Date of filing: 24.10.2017
(51) Int. Cl.: B25J 9/16, G05B 19/4061

(54) **METHOD FOR SUPERVISING A WORKING AREA, ROBOT SYSTEM AND CONTROL SYSTEM**
VERFAHREN ZUR ÜBERWACHUNG EINES ARBEITSBEREICHS, ROBOTERSYSTEM UND STEUERUNGSSYSTEM
PROCÉDÉ DE SURVEILLANCE D'UNE ZONE DE TRAVAIL, SYSTÈME DE ROBOT ET SYSTÈME DE COMMANDE

(43) Date of publication of application: 02.09.2020
(73) Proprietor: ABB Schweiz AG, 5400 Baden (CH)
(72) Inventor: ALBERTSSON, Torbjörn, 722 31 Västerås (SE)
(74) Representative: Kransell & Wennborg KB
(86) International application number: PCT/EP2017/077153
(87) International publication number: WO 2019/080996

(56) References cited:
- DE-A1- 10 324 627
- FR-A1- 2 550 984
- US-A1- 2009 133 240
- US-A1- 2014 316 564
- US-A1- 2016 243 700
- US-A1- 2017 043 484
- US-A1- 2017 113 352
- LABRECQUE PASCAL D ET AL: "uMan: A Low-Impedance Manipulator for Human-Robot Cooperation Based on Underactuated Redundancy", IEEE/ASME TRANSACTIONS ON MECHATRONICS, IEEE SERVICE CENTER, PISCATAWAY, NJ, US, vol. 22, no. 3, 1 June 2017 (2017-06-01), pages 1401 - 1411, XP011652806, ISSN: 1083-4435, [retrieved on 20170614], DOI: 10.1109/TMECH.2017.2652322
- SHARON A ET AL: "THE MACRO/MICRO MANIPULATOR: AN IMPROVED ARCHITECTURE FOR ROBOT CONTROL", ROBOTICS AND COMPUTER INTEGRATED MANUFACTURING, ELSEVIER SCIENCE PUBLISHERS BV., BARKING, GB, vol. 10, no. 3, 1 June 1993 (1993-06-01), pages 209 - 222, XP000363217, ISSN: 0736-5845, DOI: 10.1016/0736-5845(93)90056-P

## Description

### Technical Field

The present disclosure generally relates to robot systems. In particular, a method for supervising a working area in which a collaborative robot and a carrying robot are arranged to operate, a robot system comprising a collaborative robot and a carrying robot, and a control system for supervising a working area in which a collaborative robot and a carrying robot are arranged to operate, are provided.

### Background

Automated manufacturing such as that occurring on assembly lines can involve a series of workstations implementing robot systems to perform various manufacturing tasks. Such tasks can include machining, assembly and testing on products that are moved sequentially from one workstation to the next. In addition to automated processes, manual manufacturing processes can be performed by humans during a product's progress through such an assembly line. Humans working on the assembly line can be segregated from areas in which automated tasks are performed, for example by erecting physical barriers that prevent access to areas in which an occupant could be injured by a robot during its operation.

US 2015158178 A1 discloses a method for controlling a robot, which is designed to be operated in a working mode, in which a part of the robot is moved at a speed at which there is a risk of injury to a person. The working mode is deactivated if a safety device detects that the person has entered an action region of a displaceable part. A sensor unit determines a position and a posture of the person while the person is outside the action region of the part. A prediction unit determines an action region of the person. A collision monitoring unit monitors whether the two action regions overlap. The robot can optionally be switched from the working mode into a safety mode.

US 2017043484 A1 discloses methods and systems for determining and presenting virtual safety cages for robotic devices. The robotic device may comprise a robotic manipulator mounted on a movable apparatus. The robotic device comprises a robotic manipulator constituted by a robotic arm mounted on a movable apparatus constituted by a moveable holonomic cart.

DE 10324627 A1 discloses a method for monitoring an environment of an automated machine, such as an autonomously driven robot. The robot comprises a chassis and an articulated arm mounted on the chassis. The robot further comprises sensors enabling detection of presence of obstacles within the working environment of the robot. If an object, such as a person, is detected within an innermost zone, the robot is immediately stopped.

FR 2550984 A1 discloses a flexible workshop installation using one or more assemblies formed by a robot arm and its carrier and a transfer device. The carrier is provided with means allowing it to be attached at will, either to the part to be processed, or to a moving rolling beam or similar of the workshop.

US 2014316564 A1 discloses a mobile robot having a seating part, a moving apparatus to move the seating part, and a robot part with a base part to be attached to the seating part, a body capable of rotating around a vertical axis normal to an attaching surface which the seating part to be attached to the base part, and an arm connected to the body having a plurality of joints.

### Summary

One object of the present disclosure is to provide a method for supervising a working area that enables an increased automation and/or efficiency of operations carried out in the working area.

A further object of the present disclosure is to provide a method for supervising a working area that enables an efficient and safe collaboration between a person and a collaborative robot.

A still further object of the present disclosure is to provide a method for supervising a working area that enables an improvement of ergonomics and/or safety for persons carrying out work in the working area.

A still further object of the present disclosure is to provide a method for supervising a working area that enables an improvement of quality and/or flexibility of work carried out in the working area.

A still further object of the present disclosure is to provide a simple method for supervising a working area.

A still further object of the present disclosure is to provide a robot system solving one or more of the foregoing objects.

A still further object of the present disclosure is to provide a robot system that can easily and rapidly be installed or modified.

A still further object of the present disclosure is to provide a control system solving one or more of the foregoing objects.

According to one aspect, there is provided a method for supervising a working area in which a collaborative robot and a carrying robot are arranged to operate, according to claim 1. The method allows for an efficient, flexible and secure combination of collaborative robots and carrying robots, such as carrying robots constituted by traditional industrial robots. The method comprises operating the collaborative robot irrespective of whether a person within the dangerous region is detected or not.

The step of detecting whether or not a person is within a dangerous region may comprise detecting whether or not a person is within the working area. Alternatively, the step of detecting whether or not a person is within a dangerous region may comprise detecting whether or not a person is within proximity to the carrying robot, e.g. within a working range of the carrying robot. Thus, the dangerous region is constituted by a space around the carrying robot in which there is a potential risk of collision between the carrying robot and the person. A dangerous region may alternatively be referred to as an exclusionary volume.

Throughout the present disclosure, the safe mode of the carrying robot may comprise moving the carrying robot at reduced speed. Alternatively, the safe mode of the carrying robot may comprise stopping the carrying robot. When the safe mode of the carrying robot is deactivated, the carrying robot may operate in a working mode, e.g. allowed to operate at full speed. When the carrying robot moves at full speed, one or more parts of the carrying robot may move at a speed at which there is a risk of injury to a person. The carrying robot may for example fill magazines, pick up parts and/or move one or more collaborative robots when the safe mode is deactivated. These tasks may also be carried out by the carrying robot, but at a lower speed, when the carrying robot adopts a safe mode comprising moving the carrying robot at reduced speed.

The working area may for example be constituted by an assembly area for vehicles, e.g. a final assembly area. However, a working area according to the present disclosure may be constituted by any type of area for assembly of parts in a series production or other working areas.

The method may further comprise lifting the collaborative robot into and/or out from a vehicle by means of the carrying robot. In this manner, collaborative work by a person and the collaborative robot can be carried out inside a semi-finished vehicle.

A carrying robot according to the present disclosure may be constituted by an industrial robot. The carrying robot comprises at least one automatically controlled, reprogrammable, multipurpose manipulator programmable in three or more axes. The carrying robot may be either fixed in place or mobile within the working area, or within a section of the working area. The carrying robot is termed carrying robot since it is configured to carry the collaborative robot. However, the collaborative robot does not have to be carried by the carrying robot at all times.

According to a further aspect, there is provided a robot system according to claim 7.

Each of the collaborative robot, the carrying robot and the detection arrangement used in the robot system may be constituted by commercially available versions. Thus, a robot system according to the present disclosure may to a large extent use standardized elements or "building blocks".

A detection arrangement according to the present disclosure may comprise, for example, at least one scanner, camera, proximity sensor, visible light sensor, light barrier, optical sensor, laser sensor and/or infrared sensor in order to detect whether or not a person is within a dangerous region. The detection arrangement may alternatively be referred to as a safety arrangement.

The robot system may comprise one or several carrying robots and one or several collaborative robots. Each collaborative robot may be constituted by a single-arm robot, a dual-arm robot or a multi-arm robot. One example of a dual-arm robot is the YuMi ^{®} by ABB. A collaborative robot according to the present disclosure is designed for direct interaction with a human.

The detection arrangement may be configured to detect whether or not a person is within a dangerous region by detecting whether or not a person is within the working area. Alternatively, the detection arrangement may be configured to detect whether or not a person is a dangerous region by detecting whether or not a person is within proximity to the carrying robot. The robot system may comprise a plurality of collaborative robots arranged to operate within the working area and the carrying robot may be arranged to move each collaborative robot within the working area. For example, the carrying robot may be configured to lift and move a first collaborative robot to a first position in the working area, to lift and move a second collaborative robot to a second position in the working area and to lift and hold a third collaborative robot during a work process.

According to a further aspect, there is provided a control system for supervising a working area in which a collaborative robot and a carrying robot are arranged to operateaccording to claim 15.

The control system may be configured to jointly operate several or all carrying robots and/or collaborative robots within the working area, for example by means of the function MultiMove by ABB. MultiMove is a function that may be embedded into the control system that allows control of the axes of several manipulators such that they work like a single robot.

### Brief Description of the Drawings

Further details, advantages and aspects of the present disclosure will become apparent from the following embodiments taken in conjunction with the drawings, wherein:
- Fig. 1:: schematically represents a perspective view of a carrying robot carrying a collaborative robot;
- Fig. 2:: schematically represents a top view of one example of a robot system; and
- Fig. 3:: schematically represents a block diagram of one example of a control system.

### Detailed Description

In the following, a method for supervising a working area in which a collaborative robot and a carrying robot are arranged to operate, a robot system comprising a collaborative robot and a carrying robot, and a control system for supervising a working area in which a collaborative robot and a carrying robot are arranged to operate, will be described. The same reference numerals will be used to denote the same or similar structural features.

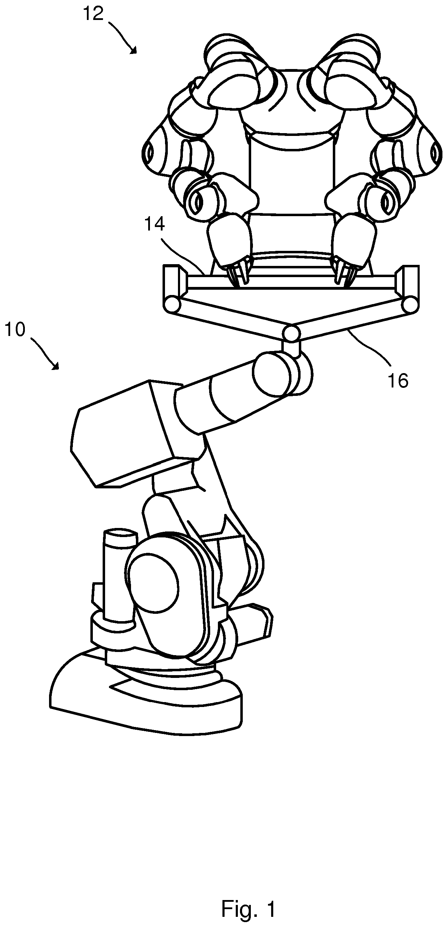

Fig. 1 schematically represents a perspective view of a carrying robot 10 carrying a collaborative robot 12. In this example, the carrying robot 10 is constituted by a commercially available traditional industrial robot having six axes, and the collaborative robot 12 is constituted by a commercially available collaborative dual-arm robot, such as the YuMi ^{®} by ABB. However, the carrying robot 10 may be constituted by alternative types of industrial robots and the collaborative robot 12 may be constituted by alternative types of collaborative robots.

One feature of collaborative robots is safety, as these robots do not need to be fenced. This enables integration in existing applications where humans normally operate. Another feature associated with these robots is ease of integration. Collaborative robots should not require the integration time or complexity of traditional industrial robots.

The collaborative robot 12 typically has a limited load carrying capacity and only carries out low energy work. Therefore, the collaborative robot 12 is harmless to a human. The collaborative robot 12 may perform monotonous and repetitive work. A person can for example assist the collaborative robot 12 with making preparatory, complementary and/or more complex tasks.

The collaborative robot 12 is arranged on a base plate 14. The carrying robot 10 comprises a tool, here exemplified as a gripper 16. The carrying robot 10 holds the collaborative robot 12 by gripping the base plate 14 by means of the gripper 16. The carrying robot 10 is configured to move the collaborative robot 12 in space. The collaborative robot 12 may carry out collaborative work together with a human while being held by the carrying robot 10. In this case, the carrying robot 10 adopts the safe mode. The carrying robot 10 may put the collaborative robot 12 at any desired position, e.g. on the ground, while the collaborative robot 12 continues to be operative. This operation may be carried out either when the safe mode of the carrying robot 10 is deactivated or when the safe mode comprises moving the carrying robot 10 at reduced speed.

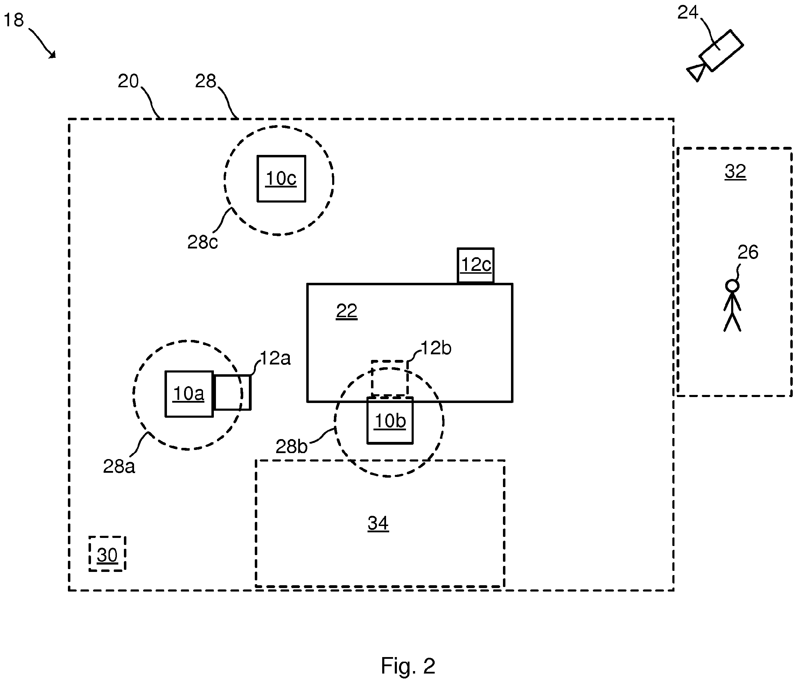

Fig. 2 schematically represents a top view of one example of a robot system 18 for carrying out work in a working area 20. The working area 20 is here exemplified as an assembly area for vehicles, such as a final assembly area along an assembly line. In Fig. 2, one semi-finished vehicle 22 is positioned in the working area 20. It is however emphasized that the invention according to the present disclosure may be implemented in other types of working areas, including assembly of other transportation equipment, household appliances and electronic goods.

In Fig. 2, the vehicle 22 is constituted by an empty car body or coachwork. Collaborative assembly work, such as installations of dashboards, seats etc., is carried out on the vehicle 22.

The robot system 18 comprises at least one collaborative robot 12 and at least one carrying robot 10 configured to carry the collaborative robot 12 and move the collaborative robot 12 within the working area 20. The carrying robot 10 and the collaborative robot 12 may each be of the type illustrated in Fig. 1.

In the example of Fig. 2, the robot system 18 comprises three carrying robots 10a, 10b, 10c and three collaborative robots 12a, 12b, 12c (also collectively referred to with reference numerals 10 and 12, respectively). However, the numbers of carrying robots 10 and collaborative robots 12 may be varied.

Each carrying robot 10 may operate in a safe mode. The safe mode may either comprise a complete standstill of the carrying robot 10 or a limitation of the movement speeds of the carrying robot 10. Force sensors may also be provided on each carrying robot 10 to further improve safety.

The robot system 18 further comprises a detection arrangement 24. The detection arrangement 24 is configured to detect whether or not a person 26 is within a dangerous region 28. In this example, the detection arrangement 24 is illustrated by a camera monitoring the working area 20. However, the detection arrangement 24 may be of any type to detect whether or not a person 26 is within a dangerous region 28. The detection arrangement 24 may also be configured to detect the position of each person 26 within the working area 20.

The robot system 18 further comprises a control system 30. The control system 30 is in signal communication with the detection arrangement 24, the carrying robots 10 and the collaborative robots 12. The control system 30 is configured to command one or more of the carrying robots 10 to activate a safe mode when the detection arrangement 24 detects that a person 26 is within the dangerous region 28. The control system 30 is also configured to command one or more of the carrying robots 10 to deactivate the safe mode when the detection arrangement 24 detects that no person 26 is within the dangerous region 28. Since the collaborative robots 12 are not harmful to humans, the collaborative robots 12 may continue to operate even when the detection arrangement 24 detects that a person 26 enters a dangerous region 28.

What is considered to constitute a dangerous region 28 may vary depending on implementation. According to one example, the entire working area 20 may be considered to constitute a dangerous region 28. In this case, the control system 30 may command each carrying robot 10 within the working area 20 to activate the safe mode when the detection arrangement 24 detects that a person 26 is within the working area 20. In Fig. 2, the person 26 is within a safe area 32 next to the working area 20 and no person 26 is within the working area 20. Thus, each carrying robot 10 operates in the normal working mode when the working area 20 is considered to constitute a dangerous region 28.

According to a further example, dangerous regions 28 may be constituted by the working spaces or ranges of each carrying robot 10, i.e. a safety region in proximity to each carrying robot 10. In this case, the control system 30 may only activate the safe mode of carrying robots 10 to which a person 26 is proximate. Thus, the safe mode may be inactive for all carrying robots 10 (i.e. the carrying robots 10 may operate in the normal working mode) when it is detected that a person 26 is within the working area 20 but not within any of the dangerous regions 28a, 28b, 28c (also collectively referred to with reference numeral 28) associated with the carrying robots 10.

One possible approach is to consider the working spaces associated with the carrying robots 10 to constitute dangerous regions 28 if all carrying robots 10 within the working area 20 are fixed to the ground. In this situation, the working spaces of the carrying robots 10 are limited. The carrying robots 10 may then adopt the normal working mode if no person 26 is within the working area 20. If a person 26 is within a dangerous region 28a, 28b, 28c of one of the carrying robots 10, this carrying robot 10 may adopt the safe mode (e.g. either reduced speed or standstill) and the remaining carrying robots 10 within the working area 20 may adopt the normal working mode or an intermediate working mode. An intermediate working mode may impose some restrictions on the movements on the carrying robot 10, but not as hard restrictions as in the safe mode.

Conversely, if one or more of the carrying robots 10 is mobile and not fixed to the ground, e.g. when one or more of the carrying robots 10 travel on a track (not illustrated) within the working area 20, the entire working area 20 may be considered to constitute a dangerous region 28.

The carrying robots 10 may move to a storage area 34 within the working area 20 (both when being fixed to the ground and when being mobile) to collect parts and fill magazines. This may be done in the normal working mode of the carrying robots 10, e.g. between shifts or at lunch break. This may also be done at reduced speed when a person 26 is within a dangerous region 28 of a carrying robot 10 (or when a person 26 is within the working area 20, if the working area 20 is considered to constituted a dangerous region 28) if the safe mode imposed on the carrying robot 10 comprises limiting the speed of the carrying robot 10.

A carrying robot 10 may for example lift a collaborative robot 12 from the ground at a first position and move the collaborative robot 12 to a second position where the collaborative robot 12 is put on the ground. In case a carrying robot 10 is arranged to move on a track or similar, the safe mode of the carrying robot 10 may also be imposed on the track, e.g. a stopping or speed limitation of the track movement.

A collaborative robot 12 may also be mounted to a carrying robot 10 such that the carrying robot 10 always carries the collaborative robot 12. In this case, the carrying robot 10 may either be fixed to the ground or be movable within the working area 20, such as by means of a track.

Fig. 2 illustrates that the carrying robot 10b lifts the collaborative robot 12b into the vehicle 22. Thus, a person 26 and the collaborative robot 12b may carry out collaborative work inside the vehicle 22. At the same time, a further collaborative robot 12c carries out external work on the vehicle 22.

Collaborative robots typically has a small workspace. By providing a detection arrangement 24 and arranging a carrying robot 10 to carry and move a collaborative robot 12 according to the present disclosure, the effective workspace of the collaborative robot 12 can be increased without compromising safety. This enables, for example, an increased automation and efficiency of operations carried out in the working area 20.

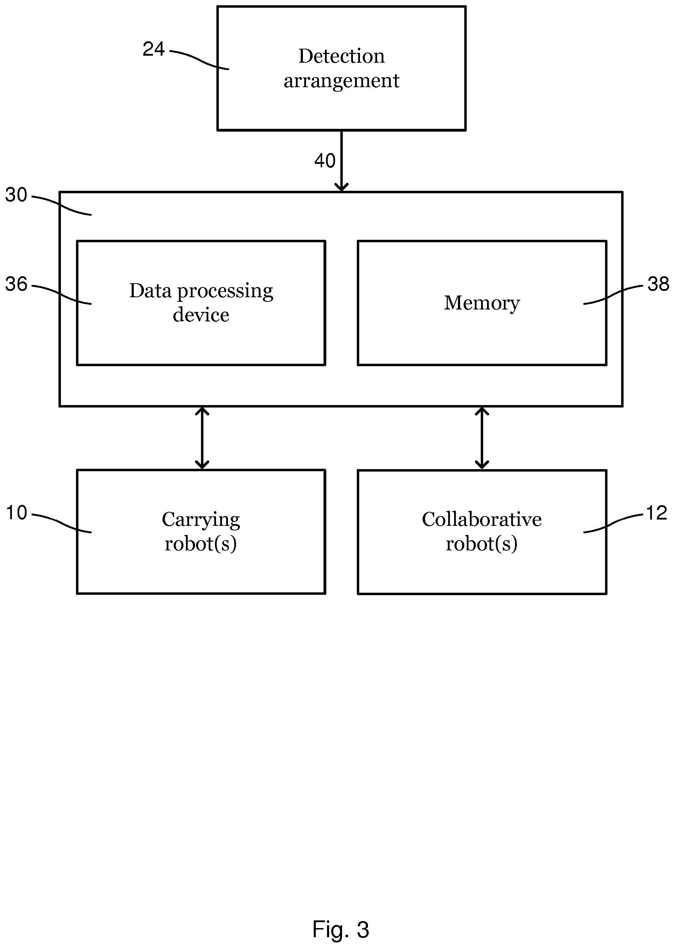

Fig. 3 schematically represents a block diagram of one example of a control system 30. The control system 30 is configured to supervise a working area 20 according to the present disclosure. The control system 30 comprises a data processing device 36 and a memory 38 having computer program stored thereon. The computer program comprises program code which, when executed by the data processing device 36, causes the data processing device 36 to perform the steps of: determining whether or not a person 26 is within a dangerous region 28, 28a, 28b, 28c based on detection data 40 from the detection arrangement 24, commanding the respective carrying robot(s) 10 to activate a safe mode upon determining that a person 26 is within the dangerous region 28, 28a, 28b, 28c, and commanding the respective carrying robot(s) 10 to deactivate the safe mode upon determining that no person 26 is within the dangerous region 28, 28a, 28b, 28c.

One or more sensor of the detection arrangement 24 provides real-time detection data 40 to the control system 30 from which the data processing device 36 can determine at least the presence of a person 26 within a dangerous region 28. The control system 30 may also be configured to determine the position of one or more persons 26 within the working area 20. The control system 30 may optionally also be configured to detect movements, accelerations, speeds or velocity of any person 26 within the working area 20 and/or to detect further potentially harmful objects within the working area 20, including mobile workstations.

The detection data 40 may for example be constituted by image data. In this case, the data processing device 36 of the control system 30 may perform image processing of the detection data 40 in order to determine whether or not a person 26 is within the dangerous region 28.

Also the collaborative robots 12 may be controlled by the control system 30. One or more of the carrying robots 10 and the collaborative robots 12 may also comprise dedicated control systems, e.g. robot controllers.

## Claims

1. Method for supervising a working area (20) in which a collaborative robot (12, 12a-c) and a carrying robot (10, 10a-c) are arranged to operate, wherein the method comprises:
- arranging the carrying robot (10, 10a-c) to carry and move the collaborative robot (12, 12a-c) within the working area (20), the carrying robot (10, 10a-c) comprising at least one automatically controlled, reprogrammable, multipurpose manipulator programmable in three or more axes, and the collaborative robot (12, 12a-c) being designed for direct interaction with a human to perform collaborative work with the human;
- monitoring the working area (20);
- detecting whether or not a person (26) is within a dangerous region (28, 28a-c), the dangerous region (28, 28a-c) being a space around the carrying robot (10, 10a-c) in which there is a potential risk of collision between the carrying robot (10, 10a-c) and the person (26);
- activating a safe mode of the carrying robot (10, 10a-c) upon detecting that a person (26) is within the dangerous region (28, 28a-c);
- deactivating the safe mode of the carrying robot (10, 10a-c) upon detecting that no person (26) is within the dangerous region (28, 28a-c); and
- operating the collaborative robot (12, 12a-c) irrespective of whether a person (26) within the dangerous region (28, 28a-c) is detected or not.

2. The method according to claim 1, wherein the step of detecting whether or not a person (26) is within a dangerous region (28, 28a-c) comprises detecting whether or not a person (26) is within the working area (20) or detecting whether or not a person (26) is within proximity to the carrying robot (10, 10a-c).

3. The method according to any of the preceding claims, wherein the safe mode of the carrying robot (10, 10a-c) comprises moving the carrying robot (10, 10a-c) at reduced speed or stopping the carrying robot (10, 10a-c).

4. The method according to any of the preceding claims, wherein the working area (20) is constituted by an assembly area for vehicles (22).

5. The method according to claim 4, further comprising lifting the collaborative robot (12, 12a-c) into and/or out from a vehicle (22) by means of the carrying robot (10, 10a-c).

6. The method according to any of the preceding claims, wherein the carrying robot (10, 10a-c) is constituted by an industrial robot.

7. Robot system (18) comprising:
- a collaborative robot (12, 12a-c) arranged to operate within a working area (20), the collaborative robot (12, 12a-c) being designed for direct interaction with a human to perform collaborative work with the human;
- a carrying robot (10, 10a-c) arranged to operate within the working area (20), the carrying robot (10, 10a-c) comprising at least one automatically controlled, reprogrammable, multipurpose manipulator programmable in three or more axes, and being arranged to carry the collaborative robot (12, 12a-c) and to move the collaborative robot (12, 12a-c) within the working area (20);
- a detection arrangement (24) configured to detect whether or not a person (26) is within a dangerous region (28, 28a-c), the dangerous region (28, 28a-c) being a space around the carrying robot (10, 10a-c) in which there is a potential risk of collision between the carrying robot (10, 10a-c) and the person (26); and
- a control system (30) in signal communication with the detection arrangement (24), the control system (30) configured to command the carrying robot (10, 10a-c) to activate a safe mode when the detection arrangement (24) detects that a person (26) is within the dangerous region (28, 28a-c), to command the carrying robot (10, 10a-c) to deactivate the safe mode when the detection arrangement (24) detects that no person (26) is within the dangerous region (28, 28a-c), command the collaborative robot (12, 12a-c) to operate irrespective of whether a person (26) within the dangerous region (28, 28a-c) is detected or not.

8. The robot system (18) according to claim 7, wherein the detection arrangement (24) is configured to detect whether or not a person (26) is within a dangerous region (28, 28a-c) by detecting whether or not a person (26) is within the working area (20) or by detecting whether or not a person (26) is within proximity to the carrying robot (10, 10a-c).

9. The robot system (18) according to claim 7 or 8, wherein the safe mode of the carrying robot (10, 10a-c) comprises moving the carrying robot (10, 10a-c) at reduced speed or stopping the carrying robot (10, 10a-c).

10. The robot system (18) according to any of claims 7 to 9, wherein the working area (20) is constituted by an assembly area for vehicles (22).

11. The robot system (18) according to claim 10, wherein the carrying robot (10, 10a-c) is configured to lift the collaborative robot (12, 12a-c) into and/or out from a vehicle (22).

12. The robot system (18) according to any of claims 7 to 11, wherein the carrying robot (10, 10a-c) is configured to put the collaborative robot (12, 12a-c) on the ground while the collaborative robot (12, 12a-c) continues to be operative.

13. The robot system (18) according to any of claims 7 to 12, wherein the carrying robot (10, 10a-c) is constituted by an industrial robot.

14. The robot system (18) according to any of claims 7 to 13, wherein the robot system (18) comprises a plurality of collaborative robots (12, 12a-c) arranged to operate within the working area (20) and wherein the carrying robot (10, 10a-c) is arranged to move each collaborative robot (12, 12a-c) within the working area (20).

15. Control system (30) for supervising a working area (20) in which a collaborative robot (12, 12a-c) and a carrying robot (10, 10a-c) are arranged to operate, wherein the carrying robot (10, 10a-c) is configured to carry the collaborative robot (12, 12a-c) and to move the collaborative robot (12, 12a-c) within the working area (20) and wherein a detection arrangement (24) is configured to detect whether or not a person (26) is within a dangerous region (28, 28a-c), the dangerous region (28, 28a-c) being a space around the carrying robot (10, 10a-c) in which there is a potential risk of collision between the carrying robot (10, 10a-c) and the person (26), the control system (30) comprising a data processing device (36) and a memory (38) having a computer program stored thereon, the computer program comprising program code which, when executed by the data processing device (36), causes the data processing device (36) to perform the steps of:
- operating the collaborative robot (12, 12a-12c) carried by the carrying robot (10, 10a-c) irrespective of whether a person (26) within the dangerous region (28, 28a-c) is detected or not, the collaborative robot (12, 12a-c) being designed for direct interaction with a human to perform collaborative work with the human and the carrying robot (10, 10a-c) comprising at least one automatically controlled, reprogrammable, multipurpose manipulator programmable in three or more axes;
- determining whether or not a person (26) is within the dangerous region (28, 28a-c) based on detection data (40) from the detection arrangement (24);
- commanding the carrying robot (10, 10a-c) to activate a safe mode upon determining that a person (26) is within the dangerous region (28, 28a-c);
- commanding the carrying robot (10, 10a-c) to deactivate the safe mode upon determining that no person (26) is within the dangerous region (28, 28a-c); and
commanding the collaborative robot (12, 12a-c) to operate irrespective of whether a person (26) within the dangerous region (28, 28a-c) is detected or not.

## Patentansprüche

1. Verfahren zum Überwachen eines Arbeitsbereichs (20), in dem ein kollaborativer Roboter (12, 12a-c) und ein Tragroboter (10, 10a-c) zum Betrieb angeordnet sind, wobei das Verfahren Folgendes umfasst:
- Anordnen des Tragroboters (10, 10a-c), um den kollaborativen Roboter (12, 12a-c) innerhalb des Arbeitsbereichs (20) zu tragen und zu bewegen, wobei der Tragroboter (10, 10a-c) mindestens einen automatisch gesteuerten, umprogrammierbaren Mehrzweck-Manipulator umfasst, der in drei oder mehr Achsen programmierbar ist, und wobei der kollaborative Roboter (12, 12a-c) für eine direkte Interaktion mit einem Menschen ausgelegt ist, um kollaborative Arbeit mit dem Menschen durchzuführen;
- Überwachen des Arbeitsbereichs (20);
- Detektieren, ob sich eine Person (26) innerhalb eines gefährlichen Bereichs (28, 28a-c) befindet oder nicht, wobei der gefährliche Bereich (28, 28a-c) ein Raum um den Tragroboter (10, 10a-c) herum ist, in dem ein potenzielles Kollisionsrisiko zwischen dem Tragroboter (10, 10a-c) und der Person (26) besteht;
- Aktivieren eines sicheren Modus des Tragroboters (10, 10a-c), wenn erfasst wird, dass sich eine Person (26) innerhalb des gefährlichen Bereichs (28, 28a-c) befindet;
- Deaktivieren des sicheren Modus des Tragroboters (10, 10a-c), wenn erkannt wird, dass sich keine Person (26) innerhalb des gefährlichen Bereichs (28, 28a-c) befindet; und
- Betreiben des kollaborativen Roboters (12, 12a-c) unabhängig davon, ob eine Person (26) innerhalb des gefährlichen Bereichs (28, 28a-c) detektiert wird oder nicht.

2. Verfahren nach Anspruch 1, wobei der Schritt des Detektierens, ob sich eine Person (26) innerhalb eines gefährlichen Bereichs (28, 28a-c) befindet oder nicht, das Detektieren, ob sich eine Person (26) innerhalb des Arbeitsbereichs (20) befindet oder nicht, oder das Detektieren, ob sich eine Person (26) innerhalb der Nähe des Tragroboters (10, 10a-c) befindet oder nicht, umfasst.

3. Verfahren nach einem der vorhergehenden Ansprüche, wobei der sichere Modus des Tragroboters (10, 10a-c) das Bewegen des Tragroboters (10, 10a-c) mit reduzierter Geschwindigkeit oder das Stoppen des Tragroboters (10, 10a-c) umfasst.

4. Verfahren nach einem der vorhergehenden Ansprüche, wobei der Arbeitsbereich (20) durch einen Montagebereich für Fahrzeuge (22) gebildet wird.

5. Verfahren nach Anspruch 4, das ferner das Anheben des kollaborativen Roboters (12, 12a-c) in und/oder aus einem Fahrzeug (22) mittels des Tragroboters (10, 10a-c) umfasst.

6. Verfahren nach einem der vorhergehenden Ansprüche, wobei der Tragroboter (10, 10a-c) durch einen Industrieroboter gebildet wird.

7. Robotersystem (18), das Folgendes umfasst:
- einen kollaborativen Roboter (12, 12a-c), der so angeordnet ist, dass er innerhalb eines Arbeitsbereichs (20) arbeitet, wobei der kollaborative Roboter (12, 12a-c) für eine direkte Interaktion mit einem Menschen ausgelegt ist, um kollaborative Arbeit mit dem Menschen durchzuführen;
- einen Tragroboter (10, 10a-c), der so angeordnet ist, dass er innerhalb des Arbeitsbereichs (20) arbeitet, wobei der Tragroboter (10, 10a-c) mindestens einen automatisch gesteuerten, umprogrammierbaren Mehrzweck-Manipulator umfasst, der in drei oder mehr Achsen programmierbar ist, und so angeordnet ist, dass er den kollaborativen Roboter (12, 12a-c) trägt und den kollaborativen Roboter (12, 12a-c) innerhalb des Arbeitsbereichs (20) bewegt;
- eine Detektionsanordnung (24), die dazu konfiguriert ist, zu detektieren, ob sich eine Person (26) innerhalb eines gefährlichen Bereichs (28, 28a-c) befindet oder nicht, wobei der gefährliche Bereich (28, 28a-c) ein Raum um den Tragroboter (10, 10a-c) herum ist, in dem ein potenzielles Kollisionsrisiko zwischen dem Tragroboter (10, 10a-c) und der Person (26) besteht; und
- ein Steuersystem (30) in Signalkommunikation mit der Detektionsanordnung (24), wobei das Steuersystem (30) dazu konfiguriert ist, den Tragroboter (10, 10a-c) anzuweisen, einen sicheren Modus zu aktivieren, wenn die Detektionsanordnung (24) detektiert, dass sich eine Person (26) innerhalb des gefährlichen Bereichs (28, 28a-c) befindet, den Tragroboter (10, 10a-c) anzuweisen, den sicheren Modus zu deaktivieren, wenn die Detektionsanordnung (24) detektiert, dass sich keine Person (26) innerhalb des gefährlichen Bereichs (28, 28a-c) befindet, den kollaborativen Roboter (12, 12a-c) anzuweisen, unabhängig davon zu arbeiten, ob eine Person (26) innerhalb des gefährlichen Bereichs (28, 28a-c) detektiert wird oder nicht.

8. Robotersystem (18) nach Anspruch 7, wobei die Detektionsanordnung (24) dazu konfiguriert ist, zu detektieren, ob sich eine Person (26) innerhalb eines gefährlichen Bereichs (28, 28a-c) befindet oder nicht, indem detektiert wird, ob sich eine Person (26) innerhalb des Arbeitsbereichs (20) befindet oder nicht, oder indem detektiert wird, ob sich eine Person (26) in der Nähe des Tragroboters (10, 10a-c) befindet oder nicht.

9. Robotersystem (18) nach Anspruch 7 oder 8, wobei der Sicherheitsmodus des Tragroboters (10, 10a-c) das Bewegen des Tragroboters (10, 10a-c) mit reduzierter Geschwindigkeit oder das Stoppen des Tragroboters (10, 10a-c) umfasst.

10. Robotersystem (18) nach einem der Ansprüche 7 bis 9, wobei der Arbeitsbereich (20) durch einen Montagebereich für Fahrzeuge (22) gebildet ist.

11. Robotersystem (18) nach Anspruch 10, wobei der Tragroboter (10, 10a-c) dazu konfiguriert ist, den kollaborativen Roboter (12, 12a-c) in ein und/oder aus einem Fahrzeug (22) zu heben.

12. Robotersystem (18) nach einem der Ansprüche 7 bis 11, wobei der Tragroboter (10, 10a-c) dazu konfiguriert ist, den kollaborativen Roboter (12, 12a-c) auf den Boden zu bringen, während der kollaborative Roboter (12, 12a-c) weiterhin betriebsbereit ist.

13. Robotersystem (18) nach einem der Ansprüche 7 bis 12, wobei der Tragroboter (10, 10a-c) durch einen Industrieroboter gebildet ist.

14. Robotersystem (18) nach einem der Ansprüche 7 bis 13, wobei das Robotersystem (18) mehrere kollaborative Roboter (12, 12a-c) umfasst, die so angeordnet sind, dass sie innerhalb des Arbeitsbereichs (20) arbeiten, und wobei der Tragroboter (10, 10a-c) so angeordnet ist, dass er jeden kollaborativen Roboter (12, 12a-c) innerhalb des Arbeitsbereichs (20) bewegt.

15. Steuersystem (30) zum Überwachen eines Arbeitsbereichs (20), in dem ein kollaborativer Roboter (12, 12a-c) und ein Tragroboter (10, 10a-c) angeordnet sind, um zu arbeiten, wobei der Tragroboter (10, 10a-c) dazu konfiguriert ist, den kollaborativen Roboter (12, 12a-c) zu tragen und den kollaborativen Roboter (12, 12a-c) innerhalb des Arbeitsbereichs (20) zu bewegen, und wobei eine Detektionsanordnung (24) dazu konfiguriert ist, zu detektieren, ob sich eine Person (26) in einem gefährlichen Bereich (28, 28a-c) befindet oder nicht, wobei der gefährliche Bereich (28, 28a-c) ein Raum um den Tragroboter (10, 10a-c) herum ist, in dem ein potenzielles Kollisionsrisiko zwischen dem Tragroboter (10, 10a-c) und der Person (26) besteht, wobei das Steuersystem (30) eine Datenverarbeitungsvorrichtung (36) und einen Speicher (38) mit einem darauf gespeicherten Computerprogramm umfasst, wobei das Computerprogramm einen Programmcode umfasst, der, wenn er durch die Datenverarbeitungsvorrichtung (36) ausgeführt wird, die Datenverarbeitungsvorrichtung (36) veranlasst, die folgenden Schritte durchzuführen:
- Betreiben des kollaborativen Roboters (12, 12a-12c), der von dem Tragroboter (10, 10a-c) getragen wird, unabhängig davon, ob eine Person (26) innerhalb des gefährlichen Bereichs (28, 28a-c) detektiert wird oder nicht, wobei der kollaborative Roboter (12, 12a-c) für eine direkte Interaktion mit einem Menschen ausgelegt ist, um kollaborative Arbeit mit dem Menschen durchzuführen, und wobei der Tragroboter (10, 10a-c) zumindest einen programmierbaren Mehrzweck-Manipulator umfasst, der in drei oder mehr Achsen programmierbar ist;
- Bestimmen, ob sich eine Person (26) innerhalb des gefährlichen Bereichs (28, 28a-c) befindet oder nicht, basierend auf Detektionsdaten (40) von der Detektionsanordnung (24);
- Anweisen des Tragroboters (10, 10a-c), einen sicheren Modus zu aktivieren, wenn bestimmt wird, dass sich eine Person (26) innerhalb des gefährlichen Bereichs (28, 28a-c) befindet;
- Anweisen des Tragroboters (10, 10a-c), den sicheren Modus zu deaktivieren, wenn festgestellt wird, dass sich keine Person (26) innerhalb des gefährlichen Bereichs (28, 28a-c) befindet; und
Anweisen des kollaborativen Roboters (12, 12a-c), unabhängig davon zu arbeiten, ob eine Person (26) innerhalb der gefährlichen Region (28, 28a-c) detektiert wird oder nicht.

## Revendications

1. Procédé pour superviser une zone de travail (20) dans laquelle un robot collaboratif (12, 12a-c) et un robot porteur (10, 10a-c) sont agencés pour fonctionner, dans lequel le procédé comprend :
- l'agencement du robot porteur (10, 10a-c) pour porter et déplacer le robot collaboratif (12, 12a-c) dans les limites de la zone de travail (20), le robot porteur (10, 10a-c) comprenant au moins un manipulateur polyvalent, reprogrammable, commandé automatiquement, programmable dans trois axes ou plus, et le robot collaboratif (12, 12a-c) étant conçu pour interaction directe avec un humain pour effectuer un travail collaboratif avec l'humain ;
- la surveillance de la zone de travail (20) ;
- la détection du fait qu'une personne (26) est dans les limites d'une région dangereuse (28, 28a-c) ou non, la région dangereuse (28, 28a-c) étant un espace autour du robot porteur (10, 10a-c) dans lequel il y a un risque potentiel de collision entre le robot porteur (10, 10a-c) et la personne (26) ;
- l'activation d'un mode de sécurité du robot porteur (10, 10a-c) à la suite de la détection qu'une personne (26) est dans les limites de la région dangereuse (28, 28a-c) ;
- la désactivation du mode de sécurité du robot porteur (10, 10a-c) à la suite de la détection qu'aucune personne (26) n'est dans les limites de la région dangereuse (28, 28a¬c) ; et
- le fonctionnement du robot collaboratif (12, 12a-c) indépendamment du fait qu'une personne (26) dans les limites de la région dangereuse (28, 28a-c) est détectée ou non.

2. Procédé selon la revendication 1, dans lequel l'étape de la détection du fait qu'une personne (26) est dans les limites d'une région dangereuse (28, 28a-c) ou non comprend la détection du fait qu'une personne (26) est dans les limites de la zone de travail (20) ou non ou la détection du fait qu'une personne (26) est dans les limites d'une proximité au robot porteur (10, 10a-c) ou non.

3. Procédé selon de quelconques des revendications précédentes, dans lequel le mode de sécurité du robot porteur (10, 10a-c) comprend le déplacement du robot porteur (10, 10a-c) à vitesse réduite ou l'arrêt du robot porteur (10, 10a-c).

4. Procédé selon de quelconques des revendications précédentes, dans lequel la zone de travail (20) est constituée par une zone d'assemblage pour des véhicules (22).

5. Procédé selon la revendication 4, comprenant en outre le levage du robot collaboratif (12, 12a-c) dans un véhicule (22) et/ou hors de celui-ci au moyen du robot porteur (10, 10a-c).

6. Procédé selon de quelconques des revendications précédentes, dans lequel le robot porteur (10, 10a-c) est constitué par un robot industriel.

7. Système de robots (18), comprenant :
- un robot collaboratif (12, 12a-c) agencé pour fonctionner dans les limites d'une zone de travail (20), le robot collaboratif (12, 12a-c) étant conçu pour interaction directe avec un humain pour effectuer un travail collaboratif avec l'humain ;
- un robot porteur (10, 10a-c) agencé pour fonctionner dans les limites de la zone de travail (20), le robot porteur (10, 10a-c) comprenant au moins un manipulateur polyvalent, reprogrammable, commandé automatiquement, programmable dans trois axes ou plus, et étant agencé pour porter le robot collaboratif (12, 12a-c) et pour déplacer le robot collaboratif (12, 12a-c) dans les limites de la zone de travail (20) ;
- un agencement de détection (24) configuré pour détecter le fait qu'une personne (26) est dans les limites d'une région dangereuse (28, 28a-c) ou non, la région dangereuse (28, 28a-c) étant un espace autour du robot porteur (10, 10a-c) dans lequel il y a un risque potentiel de collision entre le robot porteur (10, 10a-c) et la personne (26) ; et
- un système de commande (30) en communication par signal avec l'agencement de détection (24), le système de commande (30) étant configuré pour donner l'instruction au robot porteur (10, 10a-c) d'activer un mode de sécurité lorsque l'agencement de détection (24) détecte qu'une personne (26) est dans les limites de la région dangereuse (28, 28a-c), pour donner l'instruction du robot porteur (10, 10a-c) de désactiver le mode de sécurité lorsque l'agencement de détection (24) détecte qu'aucune personne (26) n'est dans les limites de la région dangereuse (28, 28a-c), donner l'instruction au robot collaboratif (12, 12a-c) de fonctionner indépendamment du fait qu'une personne (26) dans les limites de la région dangereuse (28, 28a-c) est détectée ou non.

8. Système de robots (18) selon la revendication 7, dans lequel l'agencement de détection (24) est configuré pour détecter le fait qu'une personne (26) est dans les limites d'une région dangereuse (28, 28a-c) ou non en détectant le fait qu'une personne (26) est dans les limites de la zone de travail (20) ou non ou en détectant le fait qu'une personne (26) est dans les limites d'une proximité au robot porteur (10, 10a-c) ou non.

9. Système de robots (18) selon la revendication 7 ou 8, dans lequel le mode de sécurité du robot porteur (10, 10a-c) comprend le déplacement du robot porteur (10, 10a-c) à vitesse réduite ou l'arrêt du robot porteur (10, 10a-c) .

10. Système de robots (18) selon de quelconques des revendications 7 à 9, dans lequel la zone de travail (20) est constituée par une zone d'assemblage pour véhicules (22).

11. Système de robots (18) selon la revendication 10, dans lequel le robot porteur (10, 10a-c) est configuré pour lever le robot collaboratif (12, 12a-c) dans un véhicule (22) et/ou hors de celui-ci.

12. Système de robots (18) selon de quelconques des revendications 7 à 11, dans lequel le robot porteur (10, 10a-c) est configuré pour poser le robot collaboratif (12, 12a-c) sur le sol alors que le robot collaboratif (12, 12a-c) continue d'être en fonctionnement.

13. Système de robots (18) selon de quelconques des revendications 7 à 12, dans lequel le robot porteur (10, 10a-c) est constitué par un robot industriel.

14. Système de robots (18) selon de quelconques des revendications 7 à 13, dans lequel le système de robots (18) comprend une pluralité de robots collaboratifs (12, 12a¬c) agencés pour fonctionner dans les limites de la zone de travail (20) et dans lequel le robot porteur (10, 10a-c) est agencé pour déplacer chaque robot collaboratif (12, 12a-c) dans les limites de la zone de travail (20).

15. Système de commande (30) pour superviser une zone de travail (20) dans laquelle un robot collaboratif (12, 12a-c) et un robot porteur (10, 10a-c) sont agencés pour fonctionner, dans lequel le robot porteur (10, 10a-c) est configuré pour porter le robot collaboratif (12, 12a-c) et pour déplacer le robot collaboratif (12, 12a-c) dans les limites de la zone de travail (20) et dans lequel un agencement de détection (24) est configuré pour détecter le fait qu'une personne (26) est dans les limites d'une région dangereuse (28, 28a-c) ou non, la région dangereuse (28, 28a-c) étant un espace autour du robot porteur (10, 10a-c) dans lequel il y a un risque potentiel de collision entre le robot porteur (10, 10a-c) et la personne (26), le système de commande (30) comprenant un dispositif de traitement de données (36) et une mémoire (38) ayant un programme informatique stocké sur celle-ci, le programme informatique comprenant un code de programme qui, lorsqu'il est exécuté par le dispositif de traitement de données (36), amène le dispositif de traitement de données (36) à effectuer les étapes de :
- le fonctionnement du robot collaboratif (12, 12a-12c) porté par le robot porteur (10, 10a-c) indépendamment du fait qu'une personne (26) dans les limites de la région dangereuse (28, 28a-c) est détectée ou non, le robot collaboratif (12, 12a-c) étant conçu pour interaction directe avec un humain pour effectuer un travail collaboratif avec l'humain et le robot porteur (10, 10a-c) comprenant au moins un manipulateur polyvalent, reprogrammable, commandé automatiquement, programmable dans trois axes ou plus ;
- la détermination du fait qu'une personne (26) est dans les limites de la région dangereuse (28, 28a-c) ou non sur la base de données de détection (40) provenant de l'agencement de détection (24) ;
- l'instruction au robot porteur (10, 10a-c) d'activer un mode de sécurité à la suite de la détermination qu'une personne (26) est dans les limites de la région dangereuse (28, 28a-c) ;
- l'instruction au robot porteur (10, 10a-c) de désactiver le mode de sécurité à la suite de la détermination qu'aucune personne (26) n'est dans les limites de la région dangereuse (28, 28a-c) ; et l'instruction au robot collaboratif (12, 12a-c) de fonctionner indépendamment du fait qu'une personne (26) dans les limites de la région dangereuse (28, 28a-c) est détectée ou non.
